(19) Europäisches Patentamt
European Patent Office
Office européen des brevets

(11) Veröffentlichungsnummer: **0 093 420**
**B2**

(12) # NEUE EUROPÄISCHE PATENTSCHRIFT

(45) Veröffentlichungstag der neuen Patentschrift: **06.12.89**

(51) Int. Cl.[4]: **C 07 F 9/52**

(21) Anmeldenummer: **83104195.9**

(22) Anmeldetag: **29.04.83**

(54) **Verfahren zur Herstellung von Chlor-phenyl-phosphanen.**

(30) Priorität: **03.05.82 DE 3216381**

(43) Veröffentlichungstag der Anmeldung:
**09.11.83 Patentblatt 83/45**

(45) Bekanntmachung des Hinweises auf die Patenterteilung:
**06.11.85 Patentblatt 85/45**

(45) Bekanntmachung des Hinweises auf die Entscheidung über den Einspruch:
**06.12.89 Patentblatt 89/49**

(84) Benannte Vertragsstaaten:
**AT BE CH DE FR GB IT LI NL SE**

(56) Entgegenhaltungen:
**SU-A-943 243**
**US-A-3 094 559**

**ZEITSCHRIFT FÜR ANORGANISCHE UND ALLGEMEINE CHEMIE, Band 376, Heft 1, August 1970, Seiten 37-43, Johann Ambrosius Barth, Leipzig, DD, K. SOMMER: "Zur Spaltung tertiärer Phosphine. I."**
**Lehrbuch der Anorganischen Chemie,(Hollemann-Wiberg), 1971,S. 162-163**
**Liebigs Annalen der Chemie, Band 229,(1885); S.303**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Kleiner, Hans- Jerg, Dr., Altkönigstrasse 11a, D-6242 Kronberg/Taunus (DE)**

**EP 0 093 420 B2**

LIBER, STOCKHOLM 1989

**Beschreibung**

Unter Chlor-phenyl-phosphanen werden hier die unter die allgemeine Formel

$(C_6H_5)_nPCl_{3-n}$

worin n = 1 oder 2
fallenden beiden Verbindungen Dichlor-phenyl-phosphan

$C_6H_5PCl_2$

und Chlor-diphenyl-phosphan

$(C_6H_5)_2PCl$

verstanden.

Sie sind hauptsächlich wertvolle Zwischenprodukte auf verschiedenen Sachgebieten wie z. B. dem Pflanzenschutz- und Polymeren-Sektor.

Zu Pflanzenschutzmitteln kommt man beispielsweise ausgehend von Dichlor-phenyl-phosphan auf dem Weg über das Phenylthiophosphonsäuredichlorid $C_6H_5P(S)Cl_2$. Aus Dichlor-phenyl-phosphan ist weiterhin auf bekannte Weise etwa auch benzolphosphonige Säure $C_6H_5P(O)(OH)H$ erhältlich, die für sich oder in Form ihrer Salze als Stabilisator für Polyamide von erheblicher wirtschaftlicher Bedeutung ist. Aus Chlor-diphenyl-phosphan lassen sich auf dem Weg über die entsprechenden Diphenylphosphinigsäureester $(C_6H_5)_2POR$ (R = organischer Rest) z. B. Acylphosphanoxidverbindungen herstellen, die als Photoinitiatoren für photopolymerisierbare Massen geeignet sind (EP-A2-7508).

Zur Herstellung des Dichlor-phenyl-phosphans und des Chlor-diphenyl-phosphans ist eine Reihe verschiedener Methoden bekannt. Eine solche ist z. B. beschrieben von K. Sommer auf S. 39 der Zeitschrift für Anorganische und Allgemeine Chemie, 376 (1970); die Methode besteht in der Umsetzung von Triphenylphosphan $(C_6H_5)_3P$ mit Phosphortrichlorid $PCl_3$ bei Temperaturen um 280°C unter Druck, wobei allerdings keine näheren Angaben über den Druck und etwa auch die Reaktionszeit gemacht sind. Bei einem Einsatz der Ausgangsstoffe im Verhältnis - gemeint ist wohl das Molverhältnis - 1 : 1 sollen sich nach der Reaktionsgleichung

$$(C_6H_5)_3P + PCl_3 \rightarrow C_6H_5PCl_2 + (C_6H_5)_2PCl$$

ungefähr gleiche Mengen - gemeint sind wohl gleiche molare Mengen - Dichlor-phenyl-phosphan und Chlor-diphenyl-phosphan bilden. Die Reaktionsprodukte lassen sich wegen ihrer unterschiedlichen Siedepunkte durch Destillation trennen. Etwa bei 26,6 Pa liegt der Siedepunkt des Dichlor-phenyl-phosphans bei 56 bis 58°C, derjenige des Chlor-diphenyl-phosphans bei 115 bis 120°C. Durch Zugabe von wenig Aluminiumchlorid $AlCl_3$ soll die von K. Sommer beschriebene Reaktion hauptsächlich Dichlor-phenyl-phosphan und nur wenig (unter 10 %) Chlor-diphenyl-phosphan liefern. Ausschliesslich Dichlor-phenyl-phosphan (neben unverbrauchtem $PCl_3$) soll erhalten werden, wenn man dabei (also in Gegenwart von $AlCl_3$) ein Molverhältnis der Ausgangsstoffe Triphenylphosphan und Phosphortrichlorid von 1 : 3 wählt. Die Verwendung des $AlCl_3$ stellt bei dieser Verfahrensweise jedoch einen gewissen Nachteil dar.

Ohne den Zusatz von $AlCl_3$ wird aber wie eigene Versuche (bei ca. 280°C unter autogenem Druck und einer Reaktionszeit von ca. 6 Stunden) ergeben haben - auch mit einem erheblichen Überschuss von Phosphortrichlorid praktisch keine Umsetzung erzielt. Bei einem Molverhältnis der Ausgangsstoffe Triphenylphosphan und Phosphortrichlorid von etwa 1 : 4 besteht das in minimaler Menge erhaltene Reaktionsprodukt aus etwa gleichen molaren Mengen an Dichlor-phenyl-phosphan und Chlor-diphenyl-phosphan. Der erhebliche Überschuss des einen Reaktionspartners ($PCl_3$) scheint hier also auf das Verhältnis der beiden vorerwähnten Endstoffe so gut wie keinen Einfluss zu haben.

Das in den eigenen Versuchen festgestellte Ausbleiben einer nennenswerten Umsetzung von Triphenylphosphan mit Phosphortrichlorid bei ca. 280°C/autogenem Druck/ca. 6 Std. Reaktionszeit steht im übrigen auch im Einklang mit einer älteren Veröffentlichung [S. 303 des auf S. 295 von Liebigs Annalen der Chemie 229 (1885) beginnenden Artikels von Michaelis und von Soden], wonach durch Erhitzen von Triphenylphosphan mit Phosphortrichlorid auf 290 bis 310°C im Bombenrohr kein Chlor-phenyl-phosphan erhalten wurde. Es bestand daher die Aufgabe, Bedingungen zu finden, unter denen Triphenylphosphan mit Phosphortrichlorid ohne den Einsatz eines Katalysators mit möglichst hohen Ausbeuten zu Chlor-phenyl-phosphanen umgesetzt werden kann.

Diese Aufgabe konnte erfindungsgemäss durch die Wahl einer höheren als der von K. Sommer sowie auch der von Michaelis und von Soden angegebenen Temperatur - nämlich von 320 bis 700°C gelöst werden.

Erfindungsgegenstand ist daher ein Verfahren zur Herstellung von Chlor-phenyl-phosphanen der Formel

$(C_6H_5)_nPCl_{3-n}$

worin n = 1 oder 2
durch Umsetzung von Triphenylphosphan $(C_6H_5)_3P$ und Phosphortrichlorid $PCl_3$ bei erhöhter Temperatur, das dadurch gekennzeichnet ist, dass man die Umsetzung bei Temperaturen zwischen 320 und 700°C ohne den Einsatz eines Katalysators durchführt. Im unteren Temperaturbereich - bei 320 bis 500°C - wird dabei vorzugsweise unter erhöhtem Druck insbesondere unter autogenem Druck -, im oberen Temperaturbereich - bei 500 bis 700°C - vorzugsweise bei Normaldruck gearbeitet. Dadurch werden bei Umsätzen zwischen etwa 70 und 95 % durchwegs Ausbeuten zwischen etwa 60 und 90 % d.Th. erhalten; ausserdem gelingt es durch diese Verfahrensweise, durch einen Überschuss des einen [$(C_6H_5)_3P$] oder des anderen ($PCl_3$) Ausgangsstoffs von den möglichen Endprodukten überwiegend das eine (Chlor-diphenyl-phosphan) oder das andere (Dichlor-phenyl-phosphan) zu erhalten.

Dies war überraschend, weil man aufgrund der eigenen Versuche in Anlehnung an die Veröffentlichung von K. Sommer a.a.O. sowie auch aufgrund der älteren Veröffentlichung von Michaelis und von Soden a.a.O. nicht annehmen konnte, dass die bei Temperaturen von etwa 280 bis 310°C in Abwesenheit von Katalysatoren oder der gleichen praktisch überhaupt nicht verlaufende Reaktion bei nur wenig höheren Temperaturen und darüber (ab 320°C) nun in durchaus befriedigender Weise mit hohen Ausbeuten an den gewünschten Produkten vonstatten geht. Ausserdem musste man aufgrund der Veröffentlichung von K. Sommer a.a.O. sowie der entsprechenden eigenen Versuche annehmen, dass eine Verschiebung des Verhältnisses der Endprodukte Dichlor-phenyl-phosphan und Chlor-diphenyl-phosphan nur unter Zusatz bestimmter katalytisch wirkender Stoffe wie z. B. von $AlCl_3$ möglich ist. Schliesslich war bei den erfindungsgemäss angewandten relativ hohen Temperaturen, insbesondere denjenigen über etwa 500°C, eher eine Zersetzung jedenfalls des Ausgangsprodukts Triphenylphosphan als dessen Reaktion mit Phosphortrichlorid zu erwarten, weil sich Triphenylphosphan nämlich nach S. 302 des vorher zitierten Artikels von Michaelis und von Soden in Liebigs Annalen der Chemie 229 (1885) schon bei 360°C teilweise zersetzen soll.

Im unteren Teil des Temperaturbereichs des erfindungsgemässen Verfahrens - bei 320 bis 500°C - sind Temperaturen zwischen 340 und 400°C, insbesondere solche zwischen 350 und 370°C, bevorzugt.

Bei dieser Verfahrensvariante wird vorzugsweise auch unter Überdruck, insbesondere unter dem sich in einem geschlossenen Reaktionsgefäss einstellenden (autogenen) Druck (in der Regel zwischen etwa 5 und 50 bar) gearbeitet. Die Reaktionszeit liegt hier durchweg zwischen etwa 10 Minuten und 12 Stunden, wobei die kurzen Reaktionszeiten bei den höheren Temperaturen, die längeren Reaktionszeiten bei den tieferen Temperaturen gelten.

Im oberen Teil des Temperaturbereichs des erfindungsgemässen Verfahrens - bei 500 bis 700°C - liegen die bevorzugten Temperaturen zwischen 520 und 650°C, insbesondere zwischen 550 und 620°C.

Bei dieser Verfahrensvariante wird bevorzugt unter Normaldruck gearbeitet.

Die Reaktionszeiten liegen hier praktisch nur in der Grössenordnung von Sekunden, wobei wiederum bei den tieferen Temperaturen längere Reaktionszeiten als bei den höheren Temperaturen in Frage kommen.

Das Molverhältnis der Ausgangsstoffe Triphenylphosphan und Phosphortrichlorid kann innerhalb relativ weiter Grenzen variiert werden. Bevorzugt sind Molverhältnisse von 1 zu mindestens etwa 2 sowie von mindestens etwa 2 zu 1, weil in diesen Fällen dann vorwiegend Dichlorphenylphosphan oder vorwiegend Chlordiphenylphosphan entsteht. Die diesen Reaktionen zugrunde liegenden Reaktionsgleichungen sind:

Molverhältnis $(C_6H_5)_3P$ | $PCl_3$ = 1 : ≥ 2 : $(C_6H_5)_3P + 2PCl_3 \rightarrow 3\ C_6H_5PCl_2$
Molverhältnis $(C_6H_5)_3P$ | $PCl_3$ = ≥ 2 : 1 : $2(C_6H_6)_3P + PCl_3 \rightarrow 3\ (C_6H_5)_2PCl$.

Molverhältnisse der beiden Reaktionspartner von etwa 3 - 4 : 1 bzw. 1 : etwa 3 - 4 sind im allgemeinen am günstigsten; Molverhältnisse über etwa 5 - 7 : 1 bzw. 1 : über etwa 5 - 7 bringen normalerweise keinen Vorteil mehr.

Insbesondere bei der Verfahrensvariante bei 500 bis 700°C/Normaldruck wirken sich die Überschüsse des einen Reaktionspartners - wohl wegen der kurzen Reaktionszeiten weniger stark auf die Zusammensetzung des Endprodukts aus als im Falle der Verfahrensvariante bei 320 bis 500°C/Überdruck.

Natürlich ist für das erfindungsgemässe Verfahren auch der Einsatz der Ausgangsstoffe in etwa äquimolarem Verhältnis möglich; in diesem Fall wird dann allerdings auch kein überwiegender Anteil eines der beiden Endprodukte Dichlor-phenyl-phosphan und Chlor-diphenyl-phosphan, sondern es werden etwa äquimolare Mengen dieser Verbindungen, erhalten. Die Verfahrensvariante bei 320 bis 500°C wird im allgemeinen so durchgeführt, dass Triphenylphosphan und möglichst frisch destilliertes Phosphortrichlorid im entsprechenden Molverhältnis gemischt und in einem geeigneten Autoklaven oder Druckrohr je nach Temperatureinstellung etwa 10 Minuten bis 12 Stunden gehalten werden. Nach beendeter Umsetzung wird destillativ aufgearbeitet. Sowohl die diskontinuierliche als auch die kontinuierliche Durchführung ist möglich.

Bei der Durchführung der Verfahrensvariante bei 500 bis 700°C wird zweckmässig das entsprechende Triphenyl-phosphan-Phosphortrichlorid-Gemisch mit Hilfe einer Dosiervorrichtung in eine geheizte Reaktionszone eindosiert. Als Reaktionszone eignet sich z. B. ein elektrisch geheiztes Rohr. Das aus der Reaktionszone austretende Reaktionsgemisch wird in einer Vorlage gesammelt. Dabei kann es vorteilhaft sein zu kühlen. Das Reaktionsgut wird anschliessend destilliert.

Es kann zweckmässig sein, bei dieser Verfahrensvariante einen Gasstrom durch die Reaktionszone zu leiten, wobei als Gase Inertgase wie z. B. Stickstoff oder Argon infrage kommen; auch z. B. Chlorwasserstoff ist jedoch verwendbar. Die Verfahrensvariante bei 500 bis 700°C ist besonders für eine kontinuierliche Fahrweise geeignet.

Bei hohen Umsätzen werden nach dem erfindungsgemässen Verfahren (beide Varianten)

durchweg hohe bis sehr hohe Ausbeuten an Dichlor-phenyl-phosphan und/oder Chlor-diphenylphosphan (bezogen auf die in geringerer Menge eingesetzte Ausgangsverbindung) erhalten. Wegen dieser hohen bis sehr hohen Ausbeuten bei hohen Umsätzen sowie wegen der Möglichkeit, die Umsetzung von Triphenylphosphan mit Phosphortrichlorid ohne den Zusatz irgendwelcher Katalysatoren oder dergleichen in Richtung auf die Bildung überwiegend des einen (Dichlor-phenyl-phosphan) oder des anderen Endprodukts (Chlor-diphenyl-phosphan) zu lenken, stellt die Erfindung einen erheblichen Fortschritt auf diesem Gebiet dar.

Die Erfindung wird nun durch die nachfolgenden Beispiele näher erläutert. Nach den (Erfindungs)-beispielen folgt noch ein Vergleichsbeispiel zum Stand der Technik gemäss K. Sommer, Zeitschrift für Anorganische und Allgemeine Chemie 376 (1970), S. 39, welches zeigt, dass bei ca. 280°C unter autogenem Druck in ca. 6stündiger Reaktionszeit ohne Katalysatorzusatz nur eine minimale Umsetzung von Triphenylphosphan mit Phosphortrichlorid erfolgt und dass auch ein erheblicher Überschuss des einen Reaktionspartners ($PCl_3$) praktisch ohne Einfluss auf die Zusammensetzung des Endprodukts ist.

**A) Verfahrensvariante bei 320 - 500°C**

**Beispiel 1**

90 g (= 0,3435 Mol) Triphenylphosphan und 180 g (= 1,309 Mol) frisch destilliertes Phosphortrichlorid (→ Molverhältnis 1 : 3,81) werden in einem 500 ml-Tantalautoklaven 3,5 h bei 350°C gehalten. Der Druck sinkt während dieser Zeit von 40 auf 23 bar. Dann wird destilliert. Man erhält 137 g (= 0,765 Mol) Dichlor-phenyl-phosphan (Kp.: 56 - 58°C/26,6 Pa) und 25 g (0,133 Mol) Chlor-diphenyl-phosphan (Kp.: 115 - 120°C/26,6 Pa; Molverhältnis 5,75 : 1). Die Ausbeute beträgt 75 % d.Th. an Dichlor-phenyl-phosphan und 22 % d.Th. an Chlor-diphenyl-phosphan, bezogen auf das Ausgangs-Triphenylphosphan. Das überschüssige Phosphortrichlorid sammelt sich in der der Ölpumpe vorgeschalteten Kühlfalle an.

**Beispiel 2**

20 g (= 0,076 Mol) Triphenylphosphan und 30 g (= 0,218 Mol) frisch destilliertes Phosphortrichlorid (→ Molverhältnis 1 : 2,87) werden in einem 90 ml-Druckrohr 5 h bei 340 - 350°C gehalten. Dann wird destilliert. Man erhält 30 g (= 0,17 Mol) Dichlor-phenyl-phosphan und 5 g (= 0,0227 Mol) Chlor-diphenyl-phosphan (Molverhältnis 7,5 : 1). Die Ausbeute beträgt 73 % d.Th. an Dichlor-phenyl-phosphan und 20 % d.Th. an Chlor-diphenyl-phosphan, bezogen auf das Ausgangs-Triphenylphosphan. Das überschüssige Phosphortrichlorid sammelt sich in der Ölpumpe vorgeschalteten Kühlfalle.

**Beispiel 3**

20 g (= 0,076 Mol) Triphenylphosphan und 21 g (= 0,1527 Mol) frisch destilliertes Phosphortrichlorid (→ Molverhältnis 1 : 2,0) werden in einem 90 ml-Druckrohr 5 h bei 340 - 350°C gehalten. Dann wird destilliert. Man erhält 23 g (= 0,13 Mol) Dichlor-phenyl-phosphan und 8 g (= 0,0363 Mol) Chlor-diphenyl-phosphan (Molverhältnis 3,6 : 1). Die Ausbeute beträgt 56 % d.Th. an Dichlor-phenyl-phosphan und 32 % d.Th. an Chlor-diphenylphosphan, bezogen auf das Ausgangs-Triphenylphosphan. Das überschüssige Phosphortrichlorid sammelt sich in der der Ölpumpe vorgeschalteten Kühlfalle.

**Beispiel 4**

213 g (= 0,814 Mol) Triphenylphosphan und 57 g (= 0,414 Mol) frisch destilliertes Phosphortrichlorid (→ Molverhältnis 1,97 : 1) werden in einem 500 ml Tantalautoklaven 6,5 Stunden bei 350°C gehalten. Der Druck beträgt 7 - 10 bar. Dann wird destilliert. Man erhält einen Vorlauf von 40 g, der im wesentlichen Dichlor-phenyl-phosphan enthält, 175 g Chlor-diphenyl-phosphan und 34 g Triphenylphosphan. Die Ausbeute an Chlor-diphenyl-phosphan beträgt 78 % d.Th. bei einem Umsatz von 84 % d.Th.

**Beispiel 5**

30 g (= 0,1145 Mol) Triphenylphosphan und 16 g (= 0,116 Mol) frisch destilliertes Phosphortrichlorid (→ Molverhältnis ca. 1 : 1) werden in einem ca. 90 ml Volumen umfassenden Druckrohr 6 Stunden bei 350°C gehalten. Dann wird destiliert. Man erhält 19 g (= 0,1065 Mol) Dichlor-phenyl-phosphan und 20 g (= 0,091 Mol) Chlor-diphenyl-phosphan. Die Ausbeute beträgt 46,5 % d.Th. an Dichlor-phenyl-phosphan und 40 % d.Th. an Chlor-diphenyl-phosphan.

**B) Verfahrensvariante bei 500 - 700°C**

**Beispiel 6**

Ein Gemisch von 46 g (= 0,3345 Mol) frisch destilliertem Phosphortrichlorid und 31 g (= 0,1182 Mol) Triphenylphosphan (→ Molverhältnis 2,83 : 1) wird während 30 min eingetropft in ein schwach schräg geneigtes, 60 cm langes, mit Quarz-Raschigringen von 6 mm Durchmesser gefülltes mit Stickstoff gespültes Quarzrohr, das sich in einem auf 580°C geheizten elektrischen Ofen befindet. Das in der Vorlage sich sammelnde Reaktionsgemisch wird destilliert. Man erhält 27 g (= 0,151 Mol) Dichlor-phenyl-phosphan und 13,5 g (= 0,0612 Mol) Chlor-diphenyl-phosphan (→ Molverhältnis 2,5 : 1), nicht umgesetztes Phosphortrichlorid und nicht umgesetztes Triphenylphosphan. Bezogen auf das eingesetzte Triphenylphosphan beträgt die Ausbeute 50 % d.Th. an Dichlor-phenyl-phosphan und 41 % d.Th. an Chlor-diphenyl-phosphan bei einem 85 %-igem Umsatz.

**Beispiel 7**

Ein Gemisch von 60 g (= 0,4364 Mol) frisch destilliertem Phosphortrichlorid und 40 g (= 0,1527 Mol) Triphenylphosphan (→ Molverhältnis 2,86 : 1) wird während 30 min eingetropft in die in Beispiel 6 angegebene Apparatur bei 620°C. Man erhält bei der anschliessenden Destillation 38 g (= 0,1212 Mol) Dichlor-phenyl-phosphan und 16,5 g (0,075 Mol) Chlor-diphenyl-phosphan (→ Molverhältnis 2,83 : 1), nicht umgesetztes Phosphortrichlorid und nicht umgesetztes Triphenylphosphan. Bezogen auf das eingesetzte Triphenylphosphan beträgt die Ausbeute 52 % d.Th. an Dichlor-phenyl-phosphan und 38 % d.Th. an Chlor-diphenyl-phosphan bei einem 87 %-igen Umsatz.

**Beispiel 8**

Ein Gemisch von 78 g (= 0,567 Mol) frisch destilliertem Phosphortrichlorid und 32 g (= 0,122 Mol) Triphenylphosphan (→ Molverhältnis 4,65 : 1) wird während 35 min eingetropft in die in Beispiel 6 angegebene Apparatur bei 620°C. Bei der anschliessenden Destillation erhält man 33 g (= 0,184 Mol) Dichlor-phenyl-phosphan und 12 g (= 0,0544 Mol) Chlor-diphenyl-phosphan (→ Molverhältnis 3,39 : 1), nicht umgesetztes Phosphortrichlorid und nicht umgesetztes Triphenylphosphan. Bezogen auf das eingesetzte Triphenylphosphan beträgt die Ausbeute 55 % d.Th. an Dichlor-phenyl-phosphan und 33 % d.Th. an Chlor-diphenyl-phosphan bei einem 92 %-igen Umsatz.

**Beispiel 9**

Ein Gemisch von 120 g (= 0,873 Mol) frisch destilliertem Phosphortrichlorid und 80 g (= 0,3053 Mol) Triphenylphosphan (→ Molverhältnis 2,86 : 1) wird während 30 min eingetropft in die in Beispiel 6 angegebene Apparatur bei 620°C. Bei der anschliessenden Destillation erhält man 56 g (= 0,313 Mol) Dichlor-phenyl-phosphan und 33 g (= 0,15 Mol) Chlor-diphenyl-phosphan (→ Molverhältnis 2,08 : 1), nicht umgesetztes Phosphortrichlorid und nicht umgesetztes Triphenylphosphan. Bezogen auf das eingesetzte Triphenylphosphan beträgt die Ausbeute 48 % d.Th. an Dichlor-phenyl-phosphan und 46,5 % d.Th. an Chlor-diphenyl-phosphan bei einem 71 %-igen Umsatz.



**Beispiel 10**

Ein Gemisch von 60 g (= 0,4364 Mol) frisch destilliertem Phosphortrichlorid und 40 g (= 0,1527 Mol) Triphenylphosphan (→ Molverhältnis 2,86 : 1) wird während 20 min eingetropft in die in Beispiel 6 angegebene Apparatur bei 620°C, während gleichzeitig im mässigen Strom Chlorwasserstoff durch die Apparatur geleitet wird. Bei der anschliessenden Destillation erhält man 24 g (= 0,134 Mol) Dichlor-phenyl-phosphan und 17 g (= 0,077 Mol) Chlor-diphenyl-phosphan (→ Molverhältnis 1,74 : 1) neben nicht umgesetztem Phosphortrichlorid und nicht umgesetztem Triphenylphosphan. Bezogen auf das eingesetzte Triphenylphosphan beträgt die Ausbeute 41 % d.Th. an Dichlor-phenyl-phosphan und 47 % d.Th. an Chlor-diphenyl-phosphan bei einem 71 %-igen Umsatz. Die anfallenden Chlorphosphane sind besonders rein.

**c) Vergleichbeispiel**

20 g (= 0,076 Mol) Triphenylphosphan und 40 g (= 0,291 Mol) frisch destilliertes Phosphortrichlorid (→ Molverhältnis 1 :3,82) werden in einem Bombenrohr mit einem Volumen von ca. 90 ml 6 Stunden bei 280°C gehalten. Anschliessend wird destilliert. Man erhält neben nicht umgesetztem Triphenylphosphan und Phosphortrichlorid ca. 300 mg (= 1,68 mMol) Dichlor-phenyl-phosphan und ca. 350 mg (= 1,59 mMol) Chlor-diphenylphosphan (→ Molverhältnis 1,06 : 1; Gewichtsangaben aufgrund einer gaschromatographischen Analyse eines Rohdestillates). Der Umsatz beträgt an Dichlor-phenyl-phosphan und Chlor-diphenyl-phosphan etwa 2 %.

**Patentansprüche**

1. Verfahren zur Herstellung von Chlor-phenylphosphanen der Formel

$(C_6H_5)_nPCl_{3-n}$

worin n = 1 oder 2
durch Umsetzung von Triphenylphosphan $(C_6H_5)_3P$ und Phosphortrichlorid $PCl_3$ bei erhöhter Temperatur, dadurch gekennzeichnet, dass man die Umsetzung bei Temperaturen zwischen 320 und 700°C ohne den Einsatz eines Katalysators durchführt.

2. Verfahren nach Anspruch 1, dadurch gekennzeichnet, dass man die Umsetzung im Temperaturbereich zwischen 320 und 500°C unter erhöhtem Druck, insbesondere unter autogenem Druck, durchführt.

3. Verfahren nach Anspruch 1, dadurch gekennzeichnet, dass man die Umsetzung im Temperaturbereich zwischen 500 und 700°C unter Normaldruck durchführt.

4. Verfahren nach den Ansprüchen 1 bis 3, dadurch gekennzeichnet, dass man die Ausgangsstoffe Triphenylphosphan und Phosphortrichlorid im Molverhältnis 1 zu mindestens etwa 2 oder von mindestens etwa 2 zu 1 einsetzt.

**Claims**

1. A process for preparing chlorophenylphosphanes of the formula

$(C_6H_5)_nPCl_{3-n}$

in which n = 1 or 2, by reacting triphenylphosphane, $(C_6H_5)_3P$, and phosphorus trichloride, $PCl_3$, at elevated temperature, characterized in carrying out the reaction at temperatures between 320 and 700°C without using a catalyst.

2. The process as claimed in claim 1, characterized in carrying out the reaction under elevated pressure, in particular under autogenous pressure, within the temperature range between 320 and 500°C.

3. The process as claimed in claim 1, characterized in carrying out the reaction under atmospheric pressure within the temperature range between 500 and 700°C.

4. The process as claimed in claims 1 to 3, characterized in using the starting materials triphenylphosphane and phosphorus trichloride in a molar ratio of 1 to at least about 2 or of at least about 2 to 1.

**Revendications**

1. Préparation de phényl-chlorophosphines répondant à la formule

$(C_6H_5)_nPCl$

dans laquelle n représente le nombre 1 ou le nombre 2, par réaction de la triphényl-phosphine $(C_6H_5)_3P$ et du trichlorure de phosphore $PCl_3$, à température élevée, procédé caractérisé en ce qu'on effectue la réaction à des températures comprises entre 320 et 700°C sans l'aide d'un catalyseur.

2. Procédé selon la revendication 1 caractérisé en ce qu'on effectue la réaction dans l'intervalle de température allant de 320 à 500°C, sous pression élevée, plus spécialement sous la pression autogène.

3. Procédé selon la revendication 1 caractérisé en ce qu'on effectue la réaction dans l'intervalle de température allant de 500 à 700°C et sous la pression normale.

4. Procédé selon l'une quelconque des revendications 1 à 3, caractérisé en ce que les corps de départ, c'est-à-dire la triphényl-phosphine et le trichlorure de phosphore, sont mis en jeu dans un rapport molaire inférieur ou égal à environ 1 : 2 ou supérieur ou égal à environ 2 : 1.